# FASCICULE DE BREVET EUROPEEN

(11) **EP 1 186 230 B1**
(45) Date de publication et mention de la délivrance du brevet: **03.03.2004**
(21) Numéro de dépôt: 01460053.0
(22) Date de dépôt: 10.09.2001
(51) Int. Cl.: A01K 45/00

(54) **Machine pour le remassage de volailles vivantes au sol**
Vorrichting zum Aufheben von auf dem Boden lebendem Geflügel
Device for picking up poultry living on the ground

(30) Priorité: 12.09.2000 FR 0011565
(43) Date de publication de la demande: 13.03.2002
(73) Titulaire: Carrée, Francis, F-22600 Loudeac (FR)
(72) Inventeur: Carrée, Francis, F-22600 Loudeac (FR)

(56) Documents cités:
- EP-A- 0 986 952
- FR-A- 2 275 995
- FR-A- 2 674 406

## Description

La présente invention se rapporte à une machine de ramassage de volailles vivantes au sol.

A ce jour, le travail de ramassage de volailles vivantes au sol est pénible et de nombreux procédés ont été conçus par des rotors à axe horizontal ou vertical devant différents tapis ou une fourche. Le procédé de ramassage devant une fourche est satisfaisant du point de vue qualité et débit, mais lorsque la fourche est soulevée du sol, les pattes des animaux passent entre les doigts, ce qui occasionne des hématomes sur les cuisses, voir p.e. le document FR-A-2275995.

Pour remédier aux inconvénients des procédés connus, la présente invention, telle qu'elle est définie dans la revendication 1, consiste en un réceptacle attelé à un engin de manutention pour le ramassage des animaux vivants. Le réceptacle sert à accumuler les volailles, en les faisant entrer et sortir par l'avant de la machine, avant le transfert sur un dispositif d'évacuation.

Dans le but d'assurer un ramassage parfait sans blesser les animaux, la machine consiste en un réceptacle se déplaçant sur le sol, composé d'un plateau fermé sur les côtés et à l'arrière par des parois, pour la contention des animaux.

Une herse, disposée à l'avant du réceptacle sur une poutrelle transversale, équipée de dents à entraxe variable et interchangeables suivant la nature des animaux, soulève ces derniers du sol et a un mouvement flottant pour épouser les irrégularités du sol. Cette herse s'escamote en dessous du fond du réceptacle pour permettre la sortie des animaux par gravité vers l'avant.

Au moins un rotor à axe horizontal, équipé de doigts souples, placé au-dessus de la herse, facilite l'avancement des animaux vers le réceptacle. En variante le rotor et la herse peuvent être placés devant un tapis roulant.

Selon une autre importante caractéristique de l'invention le dispositif de ramassage peut être constitué d'un ou plusieurs réceptacles.

Etant donné la diversité des animaux à ramasser, par exemple du coquelet de 900 grammes au dindon de 10 kilogrammes, d'autres caractéristiques et avantages de l'invention ressortiront des revendications et de la description ci-après, d'exemples de réalisations non limitatifs de l'invention, avec référence aux dessins annexés dans lesquels :
- La figure 1 représente schématiquement une vue de dessus du dispositif de ramassage des animaux vivants au sol selon l'invention.
- La figure 2 représente schématiquement une vue de côté du dispositif de ramassage des animaux vivants au sol posé sur le sol selon l'invention.
- La figure 3 représente schématiquement une vue de côté du dispositif de ramassage des animaux vivants au sol soulevé au-dessus du niveau du sol par l'engin de manutention non représenté, et montre l'escamotage de la herse en dessous du fond du réceptacle pour permettre la sortie des animaux vers l'avant, selon l'invention.

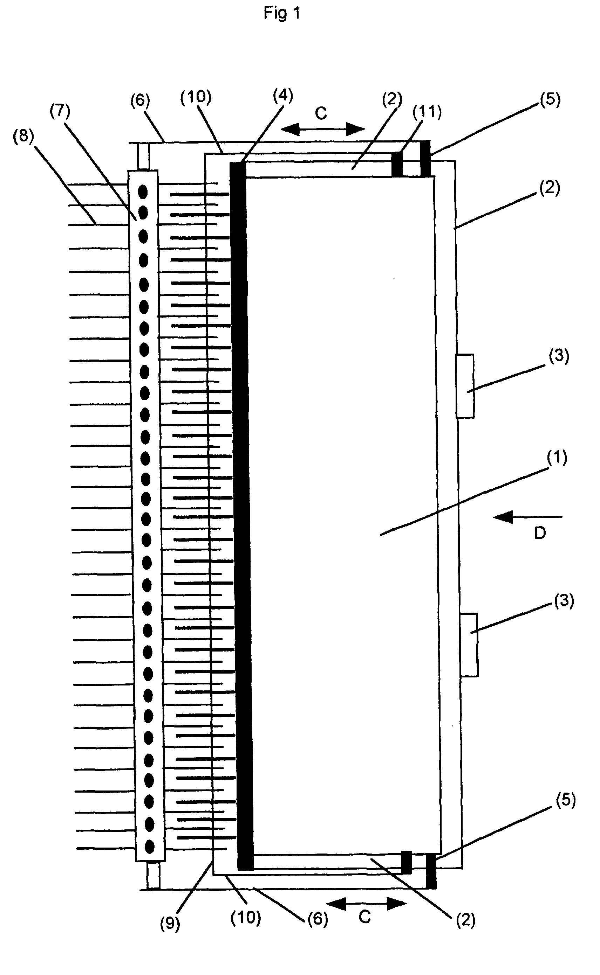

Tel qu'il est représenté sur la figure 1, le procédé de ramassage des animaux vivants au sol selon l'invention est une vue de dessus du réceptacle posé au sol. Il se compose d'un fond (1) sensiblement plat, fermé à l'arrière et de chaque côté par les parois (2). Afin de mieux contrôler le remplissage du réceptacle, la paroi arrière peut être translucide. Sur la paroi arrière sont fixés les plots d'accouplement (3) de l'engin de manutention non représenté. Pour éviter le ramassage de la litière, sur le fond (1) du réceptacle est fixé une lame biseautée (4) dans la partie avant. Sur les parois (2) du réceptacle sont fixés les axes (5) maintenants les poutrelles (6) de support du rotor (7) munis de doigts souples (8). La herse (9) est solidaire des poutrelles (10) oscillant autour de l'axe (11) fixé aux parois (2). Des contacteurs fixés sur le réceptacle indiquent au conducteur de l'engin de manutention la position adéquate. Suivant la capacité du réceptacle, plusieurs rotors munis de doigts souples, à vitesse variable, peuvent être montés en sa partie supérieure, réglables horizontalement et verticalement.

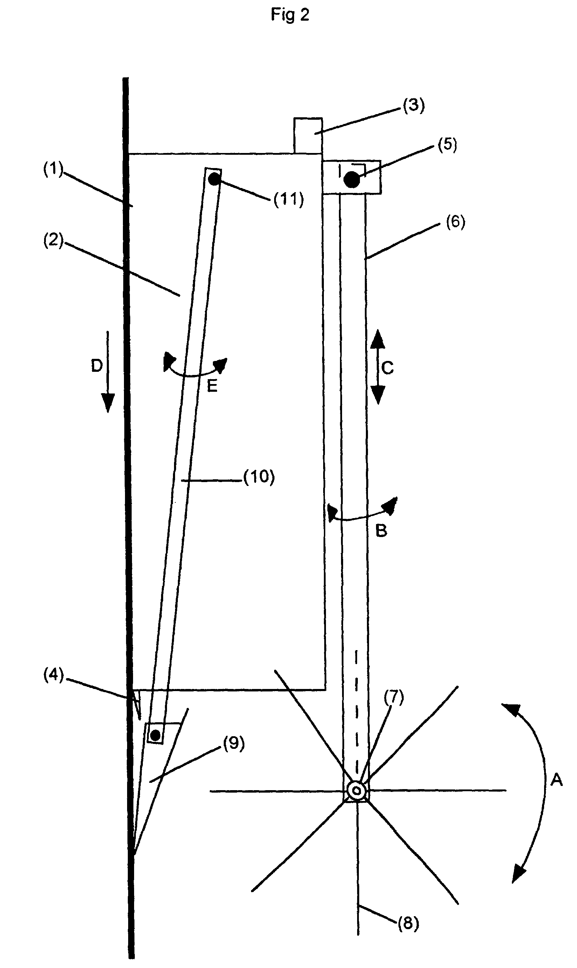

Tel qu'il est représenté schématiquement sur la figure 2, le procédé de ramassage des animaux vivants au sol est une vue de côté du dispositif posé sur le sol selon l'invention. Elle représente la herse (9) fixée sur la poutrelle (10) oscillant suivant la flèche E sur l'axe (11) solidaire des parois (2). Elle montre la lame biseautée (4), le rotor (7) tournant dans le sens de la flèche A, munis de doigts souples (8).Afin d'être bien positionné, le rotor (7) se déplace verticalement suivant la flèche B et horizontalement suivant la flèche C. Le dispositif de ramassage se déplace suivant la flèche D.

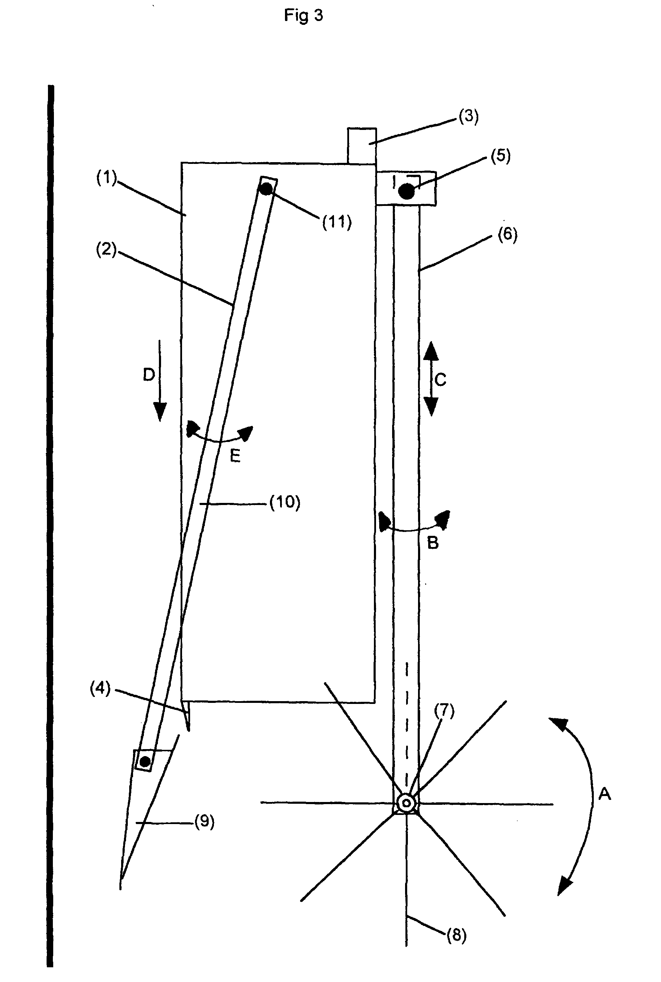

Tel qu'il est représenté schématiquement sur la figure 3, le procédé de ramassage des animaux vivants au sol est une vue de côté selon l'invention. Il représente le dispositif de ramassage soulevé au-dessus du sol par un engin de manutention non représenté, et montre l'escamotage de la herse (9) suivant la flèche E, pour permettre la sortie des animaux par l'avant du réceptacle. La flèche A donne le sens de rotation du rotor (7), afin d'être bien positionné, il se déplace verticalement suivant la flèche B et horizontalement suivant la flèche C. Le dispositif de ramassage se déplace suivant la flèche D.

Il est bien évident que l'invention n'est pas limitée aux modes de réalisation tels que décrits ci-dessus et représentés sur les dessins annexés. Des modifications restent possibles, notamment en ce qui concerne la constitution des divers éléments ou par substitution d'équivalents techniques, sans pour autant sortir du domaine de protection défini dans les revendications.

## Revendications

1. Machine de ramassage de volailles vivantes au sol, composé d'un réceptacle attelé à un engin de manutention, comportant un fond (1) sensiblement plat, fermé à l'arrière et de chaque côté par des parois (2) pour la contention des animaux, la machine comprenant dans la partie avant une herse (9) oscillante et escamotable au-dessus de laquelle tourne au moins un rotor (7) à axe sensiblement horizontal, à vitesse variable muni de doigts souples (18) pour conduire les animaux vers le réceptacle.

2. Machine selon la revendication 1 **caractérisée en ce qu'**à l'avant du fond du réceptacle se situe une lame biseautée (4) qui évite la montée des litières.

3. Machine selon la revendication 1 **caractérisée en ce que** le réceptacle est équipé de contacteurs pour renseigner le conducteur de l'engin de la position adéquate.

4. Machine selon la revendication 1 **caractérisée en ce que** le rotor à axe sensiblement horizontal et à vitesse variable se déplace verticalement et horizontalement au-dessus de la herse suivant la conformité des animaux.

5. Machine selon la revendication 1 **caractérisée en ce qu'**elle peut être équipée d'un ou plusieurs rotors à axe sensiblement horizontal, à vitesse de rotation variable et réglable verticalement et horizontalement.

6. Machine selon la revendication 1 **caractérisée en ce que** la paroi arrière du réceptacle peut être de matériau translucide pour renseigner le conducteur sur le remplissage du réceptacle.

7. Machine selon la revendication 1 **caractérisée en ce que** le dispositif peut être constitué d'un ou plusieurs réceptacles.

8. Machine selon la revendication 1 **caractérisée en ce que** les volailles sont chargées et déchargées en la partie avant du réceptacle.

9. Machine selon la revendication 1 **caractérisée en ce que** les volailles sortent du réceptacle par gravité pour leur transfert sur un dispositif d'évacuation.

## Patentansprüche

1. Vorrichtung zum Einsammeln von Geflügel in Bodenhaltung, die aus einem Aufnahmebehälter besteht, der an eine Transporteinrichtung angekuppelt ist, einen relativ flachen Boden (1) hat und an der Rückseite und auf jeder Seite von Wänden (2) abgeschlossen ist, damit die Tiere darin aufgenommen werden können. Die Vorrichtung verfügt im vorderen Teil über eine schwingende und wegklappbare Egge (9), über der mindestens ein Rotor (7) mit einer relativ waagrechten Achse und mit wechselnder Drehzahl dreht, der die Tiere mit seinen elastischen Zinken (15) in den Aufnahmebehälter führt.

2. Vorrichtung nach Anspruch 1, **dadurch gekennzeichnet, dass** sich vom am Behälterboden eine abgeschrägte Lamelle (4) befindet, durch die das Aufnehmen von Streu verhindert wird.

3. Vorrichtung nach Anspruch 1, **dadurch gekennzeichnet, dass** der Aufnahmebehälter mit Sensoren ausgerüstet ist, um dem Maschinenführer Informationen über die zweckmäßige Position zu geben.

4. Vorrichtung nach Anspruch 1, **dadurch gekennzeichnet, dass** sich der Rotor mit relativ waagrechter Achse und mit wechselnder Drehzahl je nach der Größe der Tiere senkrecht und waagrecht über der Egge bewegt.

5. Vorrichtung nach Anspruch 1, **dadurch gekennzeichnet, dass** sie mit einem oder mehreren Rotoren mit wechselnder Drehzahl und mit relativ waagrechten Achsen, die waagrecht und senkrecht einstellbar sind, ausgerüstet werden kann.

6. Vorrichtung nach Anspruch 1, **dadurch gekennzeichnet, dass** die Rückwand des Aufnahmebehälters aus einem transparenten Material bestehen kann, damit der Maschinenführer sieht, wie weit der Behälter gefüllt ist.

7. Vorrichtung nach Anspruch 1, **dadurch gekennzeichnet, dass** sie aus einem oder mehreren Aufnahmebehältern bestehen kann.

8. Vorrichtung nach Anspruch 1, **dadurch gekennzeichnet, dass** das Geflügel im vorderen Teil des Aufnahmebehälters ein- und ausgeladen wird.

9. Vorrichtung nach Anspruch 1, **dadurch gekennzeichnet, dass** das Geflügel den Behälter aufgrund der Schwerkraft verlässt, um dann über eine Transportvorrichtung weiter befördert zu werden.

## Claims

1. Machine designed to collect live poultry on the ground, made of a receptacle harnessed with a handling machine which possesses a relatively flat bottom(1), closed at the back and on each side by walls(2) to restrain the animals, caracterized by oscillating and retractable harrows(9) located at the front and above which turns at least one rotor(7) on an almost horizontal axis, at variable speed and equiped with flexible fingers(18) designed to direct the animals towards the receptacle.

2. Machine according to claim 1 **characterized by** the fact that a bevelled blade (4) is located above the bottom of the receptacle to avoid the rise of litters.

3. Machine according to claim 1 **characterized by** the fact that the receptable is equipped with sensors to inform the machine's driver of the appropriate position to maintain.

4. Machine according to claim 1 **characterized by** the fact that the rotor with almost horizontal axis and variable speed moves vertically and horizontally above the harrows depending on animal size.

5. Machine according to claim 1 **characterized by** the fact that it can be equipped with one or more rotors on almost horizontal axis, with variable revolution speeds and adjustable vertically and horizontally.

6. Machine according to claim 1 **characterized by** the fact that the receptacle's back wall can be made of translucent material to inform the driver about the filling of the receptacle.

7. Machine according to claim 1 **characterized by** the fact that the device can consist of one or several receptacles.

8. Machine according to claim 1 **characterized by** the fact that the live poultry is loaded and unloaded at the front of the receptacle.

9. machine according to claim 1 **characterized by** the fact that the animals exit the receptacle through gravity and transfer onto an evacuation device.
